# EUROPEAN PATENT APPLICATION

(11) **EP 3 379 516 A1**
(43) Date of publication of application: **26.09.2018**
(21) Application number: 18162989.0
(22) Date of filing: 20.03.2018
(51) Int. Cl.: G08G 1/16, B60R 1/00, B60W 30/12, G06K 9/00

(54) **DRIVING SUPPORT SYSTEM**

(30) Priority: 21.03.2017 JP 2017054513
(71) Applicant: Mitsubishi Jidosha Kogyo Kabushiki Kaisha, Tokyo 108-8410 (JP)
(72) Inventor: OGURA, Kazuki, Minato-Ku, Tokyo 108-8410 (JP)
(74) Representative: Regimbeau

(57) **Abstract**

A driving support system (11) takes an image of a lane marking on a traveling road, creates a first reference line at an inner side of the lane marking obtained based on the taken image, and alerts a driver when a vehicle passes across the first reference line. Furthermore, the driving support system changes the first reference line to a second reference line located inward of the first reference line when passing is prohibited on the traveling road where the vehicle travels, a steering angle of a steering wheel is equal to or larger than a prescribed angle toward the lane marking side, and a step-on amount of an accelerator pedal is equal to or larger than a prescribed amount (ST106).

## Description

The present invention relates to a driving support system.

A technique for departure prevention support according to line types of lane markings is known in which a line type identifying and calculating unit sets line types Lw, Ly, Lb for lane markings LL, LR based on line type recognition information recognized by a camera unit, a departure determining and calculating unit sets departure determination thresholds SLW, Sly, SLb corresponding to the line types Lw, Ly, Lb at inner sides of the lane markings LL, LR and compares a position of a subject vehicle at a foreseen distance LP on an advancing route with each of the departure determination thresholds SLW, Sly, SLb to determine a possibility of departure, and a lateral position departure calculating unit determines a lateral position deviation ΔT between a front gaze point TP on the subject vehicle advancing route at the foreseen distance LP and a target point TG set at the center of a lane, and a steering torque calculating unit sets a steering torque allowing the subject vehicle to return to the target point TG according to the lateral position deviation ΔT (JP 2015-27837 A).

Various limitations may be imposed on a traveling road on which the vehicle travels. For example, passing other vehicles may be prohibited. If any limitation is set on the traveling road, a reference line set to prevent lane departure is desirably changed according to the limitation. For example, while the vehicle is traveling on a left one of two lanes on one side of the road, if passing other vehicles is prohibited on the traveling road, the reference line is desirably positioned more rightward to provide an early alert when moving to the right lane. The technique described in JP 2015-27837 A allows departure prevention support according to the line types of the lane markings and fails to take into account departure prevention support according to limitations on the traveling road.

The present invention has been made in view of the above-described circumstances. An object of the present invention is to provide a driving support system which enables vehicle departure prevention support to be appropriately performed, allowing safer driving support to be achieved.

An aspect of the present invention provides a driving support system configured to support driving of a vehicle by a driver, the driving support system including image taking means for taking an image of a lane marking on a traveling road, alerting means for creating a first reference line at an inner side of the lane marking obtained based on the taken image taken by the image taking means and alerting the driver when the vehicle passes across the first reference line, steering angle determining means for determining whether or not a steering angle of a steering wheel is equal to or larger than a prescribed angle toward the lane marking side, step-on amount determining means for determining whether or not a step-on amount by which an accelerator pedal is stepped on is equal to or larger than a prescribed amount, acquiring means for acquiring information as to whether or not passing is prohibited on a traveling road where the vehicle travels, and reference line changing means for changing the first reference line to a second reference line located inward of the first reference line when information indicating that passing is prohibited on the traveling road where the vehicle travels has been acquired by the acquiring means, the steering angle is equal to or larger than the prescribed angle toward the lane marking side, and the step-on amount is equal to or larger than the prescribed amount.

In this configuration, on the road where passing is prohibited, the driving support system can provide a lane departure prevention alert based on the second reference line located inward of the first reference line when the steering angle is equal to or larger than the prescribed angle toward the lane marking and the step-on amount is equal to or larger than the prescribed amount, in other words, if the driver intentionally advances the vehicle toward the lane marking. Thus, on the road where passing is prohibited, vehicle departure prevention support can be appropriately performed, allowing safer driving support to be achieved.

The above-described reference line changing means may change the second reference line to the first reference line when at least one of following conditions is satisfied: prohibition of passing on the traveling road has ended, the steering angle is smaller than the prescribed angle toward the lane marking, and the step-on amount is smaller than the prescribed amount.

In this configuration, the driving support system may change the second reference line back to the first reference line to widen a range over which the vehicle can travel with no lane departure prevention alert provided, in at least one of a case where the road where passing is prohibited has been passed, a case where the steering angle is smaller than the prescribed angle toward the lane marking, and a case where the step-on amount is smaller than the prescribed amount, in other words, in a case where passing prohibition on the road ends or a case where the driver no longer intends to depart from the lane. In other words, an area where the vehicle departure prevention alert is given may be reduced to facilitate traveling of the vehicle.

Moreover, the above-described vehicle may include a direction indicator configured to alert the driver of a lane change, and the driving support system may include deactivating means for deactivating the alerting means when the direction indicator is on and stopping means for stopping the deactivating means when the reference line has been changed to the second reference line by the reference line changing means.

When the vehicle is allowed to depart from the lane based on the driver's intention as in a case where the direction indicator is on, the alerting means may be deactivated to facilitate smooth traveling. However, since the driving support system is configured as described above, even when the vehicle is allowed to depart from the lane in accordance with the driver's intention, the driver can be alerted by stoppage of the deactivating function for the lane departure prevention alert, in other words, execution of the lane departure prevention alert, even if the direction indicator is on (regardless of whether the direction indicator is on or off), in a case where the second reference line is set. Consequently, the appropriate alert can be provided even if the driver misses a road sign for passing prohibition.

Moreover, the above-described driving support system may include resistance value acquiring means for acquiring a resistance value of a road surface of the traveling road, and the reference line changing means may change the second reference line to a third reference line located inward of the second reference line when the reference value acquired by the resistance value acquiring means is equal to or smaller than a prescribed value.

In this configuration, when the road surface is slippery, the lane departure prevention alert may be provided based on the third reference line located further inward of the second reference line, thus allowing safety to be further enhanced.

Moreover, the above-described driving support system may include lane width acquiring means for acquiring a lane width of the traveling road, and the reference line changing means may change the second reference line to a fourth reference line located outward of the second reference line when the lane width acquired by the lane width acquiring means is equal to or smaller than a prescribed value.

In this configuration, when the lane width of the traveling road where the vehicle travels is small, the lane departure prevention alert may be provided based on the fourth reference line located outward of the second reference line (located on the lane marking side). This enables an increase in the lane width over which the lane departure prevention alert is not issued, allowing traveling performance of the vehicle to be enhanced.

The driving support system of the present invention can perform the appropriate lane departure prevention support on the road where passing is prohibited, and thus achieve safer driving support.

The invention can be more fully understood from the following detailed description when taken in conjunction with the accompanying drawings, in which:
FIG. 1 is a diagram illustrating an example of a general configuration of a vehicle according to a first embodiment of the present invention;
FIG. 2 is a diagram illustrating an example of settings in a reference line setting unit according to the first embodiment;
FIG. 3 is a diagram illustrating an example of a reference line according to the first embodiment;
FIG. 4 is a diagram illustrating an example of the reference line according to the first embodiment;
FIG. 5 is a flowchart illustrating an example of a process of setting the reference line according to the first embodiment;
FIG. 6 is a diagram illustrating an example of areas of the reference lines according to the first embodiment;
FIG. 7 is a flowchart illustrating an example of a lane departure prevention alerting process according to the first embodiment;
FIG. 8 is a diagram illustrating an example of a general configuration of a vehicle according to a second embodiment of the present invention;
FIG. 9 is a flowchart illustrating an example of a stopping process according to the second embodiment;
FIG. 10 is a diagram illustrating an example of settings in the reference line setting unit according to a third embodiment of the present invention;
FIG. 11 is a flowchart illustrating an example of a process of setting the reference line according to the third embodiment;
FIG. 12 is a diagram illustrating an example of settings in the reference line setting unit according to a fourth embodiment of the present invention;
FIG. 13 is a flowchart illustrating an example of a process of setting the reference line according to the fourth embodiment;
FIG. 14 is a diagram illustrating an example of the reference line according to a fifth embodiment of the present invention; and
FIG. 15 is a diagram illustrating an example of the reference line according to the fifth embodiment.

Embodiments of the present invention will be described below with reference to the drawings.

### (First Embodiments)

In description of the present first embodiment, left-hand traffic is specified for a traveling road where a vehicle travels. Here, the left-hand traffic refers to a regulation under which, if, for example, the traveling road is divided into two lanes by a center line, vehicles normally travel on the left lane and use the right lane when passing other vehicles.

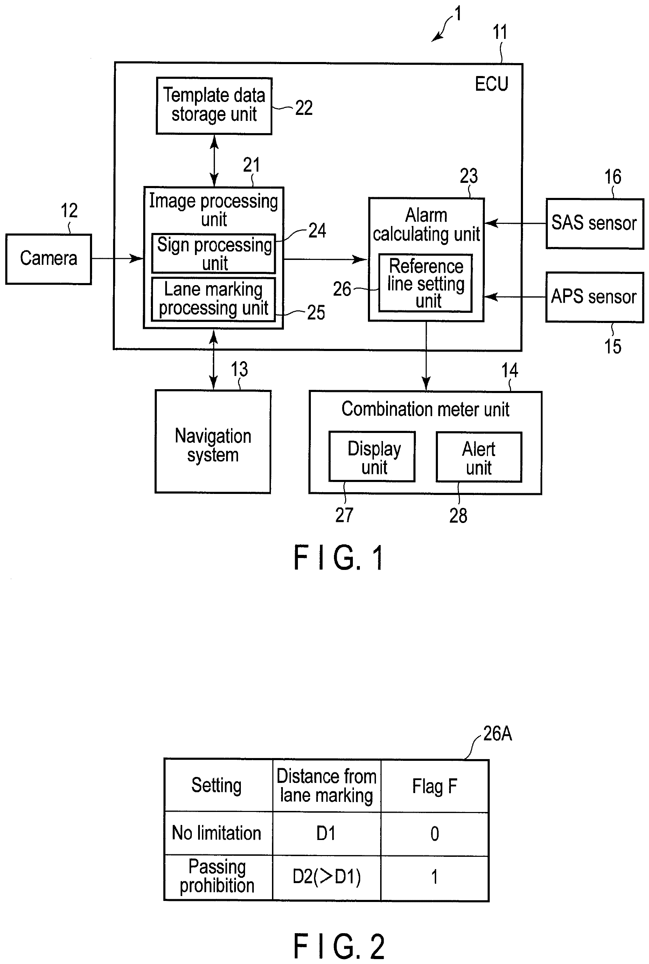

FIG. 1 is a diagram illustrating an example of a general configuration of a vehicle 1. As illustrated in FIG. 1, the vehicle 1 to which a driving support system is applied includes an electronic control unit (ECU) 11, a camera 12, a navigation system 13, a combination meter unit 14, an APS sensor 15, and an SAS sensor 16. The vehicle 1 includes other components used to achieve functions of the vehicle, but illustration and description of the components are omitted.

The ECU 11 includes a ROM, a RAM, and a memory to integrally control the vehicle 1 as a whole. The ECU 11 further includes an image processing unit 21, a template data storage unit 22, and an alert calculating unit 23. The image processing unit 21 includes a sign processing unit 24 and a lane marking processing unit 25. Furthermore, the alert calculating unit 23 includes a reference line setting unit 26.

The camera (image taking means) 12 is provided on a front side of the vehicle 1 to take an image of the front of the vehicle 1 and a traveling road surface to output data on the taken image to the image processing unit 21.

The navigation system 13 guides a driver along a traveling route to a prescribed destination. The navigation system 13 also provides guidance about the traveling road where the vehicle 1 travels. The guidance includes, for example, information such as passing prohibition. On which traveling road the vehicle 1 is positioned may be determined by a global positioning system (GPS). Then, the traveling road may be identified by matching the determined position of the vehicle 1 against map information provided by the navigation system 13.

The combination meter unit (alerting means) 14 includes a display unit 27 and an alerting unit 28. The display unit 27 and the alerting unit 28 operate in such a manner that, if the combination meter unit 14 receives alert information from the alert calculating unit 23, the display unit 27 lights a lamp indicating that the vehicle may depart from the lane (lane marking) and the alerting unit 28 emits a sound to alert the driver that the vehicle may depart from the lane (lane departure prevention alert system). In this manner, in the present embodiment, the driver is informed of the possibility of lane departure by the display provided by the display unit 27 and the alert provided by the alerting unit 28.

The APS sensor 15 is an accelerator position sensor. The APS sensor detects the step-on amount by which the driver has stepped on an accelerator pedal (not illustrated in the drawings). The APS sensor 15 also outputs an APS sensor value corresponding to a detection result to the alert calculating unit 23.

The SAS sensor 16 is a steering angle sensor. The SAS sensor 16 detects a turning angle through which the driver turns the steering wheel (not illustrated in the drawings) toward the fast lane. The SAS sensor 16 also outputs an SAS sensor value corresponding to a detection result to the alert calculating unit 23.

Now, the processing units in the ECU 11 will be described.

The template data storage unit 22 stores data indicative of passing prohibition and data indicative of the end of passing prohibition which are displayed at least on road signs.

The image processing unit 21 executes image processing on image data received from the camera 12. The sign processing unit 24 and the lane marking processing unit 25, which are included in the image processing unit 21 as described above, execute the following processing.

In a case of recognizing a road sign in the processed image data, the sign processing unit 24 compares the image data on the recognized road sign with template data indicative of passing prohibition and data indicative of the end of passing prohibition which are stored in the template data storage unit 22 to output information indicating that passing is prohibited on the road (acquiring means) and information indicating that passing prohibition has ended, to the alert calculating unit 23. In the description of the present embodiment, based on the image data received from the camera 12, the ECU 11 acquires information indicating whether or not passing is prohibited on the traveling road and information indicating whether or not passing prohibition has ended. However, the navigation system 13 may acquire information indicating whether or not passing is prohibited and information indicating whether or not passing prohibition has ended.

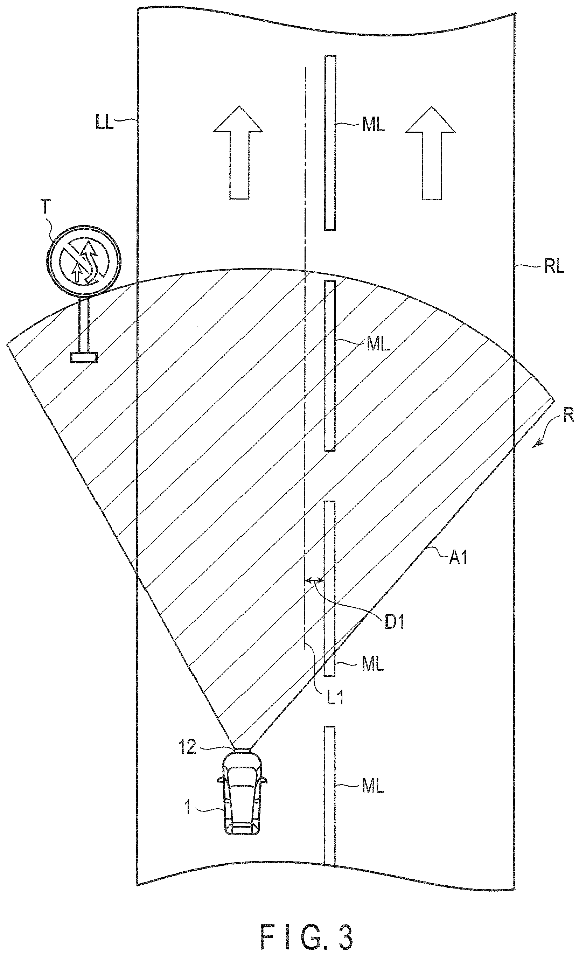

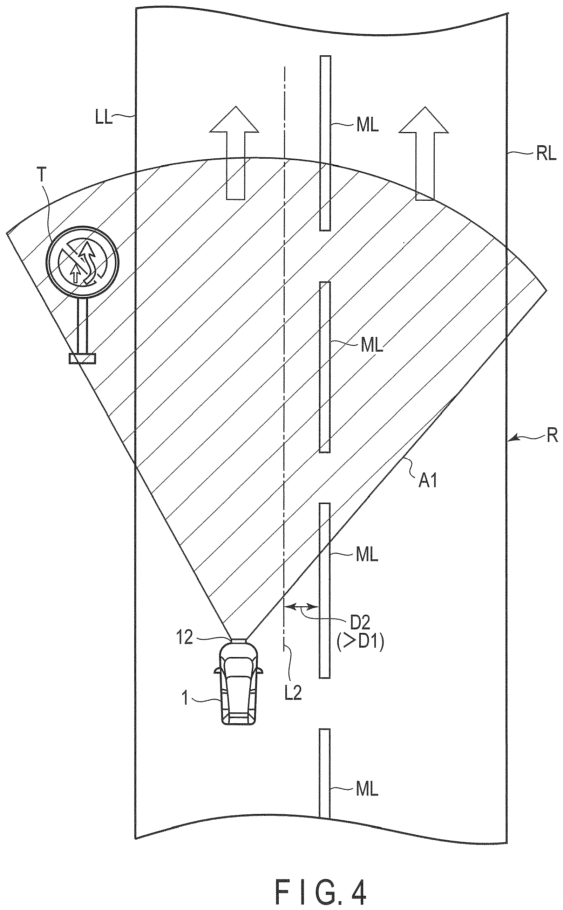

Furthermore, the lane marking processing unit 25 processes image data on a traveling road surface included in the processed image data to recognize lane markings (left lane marking LL, center line ML, right lane marking RL; see FIG. 3 and FIG. 4), and outputs recognition results to the alert calculating unit 23.

Based on the information received from the image processing unit 21, the APS sensor value received from the APS sensor 15, and the SAS sensor value received from the SAS sensor 16, the alert calculating unit 23 controls the settings in the reference line setting unit 26 and outputs the alert information to the combination meter unit 14. The details of processing of the alert calculating unit 23 will be described below in detail.

The reference line setting unit 26 sets a reference line which allows the lane departure prevention alert to be issued. FIG. 2 is a diagram illustrating a reference line setting unit 26A corresponding to an example of settings in the reference line setting unit 26. As illustrated in FIG. 2, the reference line setting unit 26A includes two settings represented as "no limitation" and "passing prohibition". The "no limitation" corresponds to a case where no passing prohibition limitation is imposed on the traveling road. When the "no limitation" is set, a reference line L1 (first reference line) is located at a distance D1 from the lane marking (center line ML; see FIG. 3) toward the vehicle 1 side (located inward of the lane marking). When "passing prohibition" is set, a reference line L2 (second reference line) is located at a distance D2 from the lane marking (center line ML, see FIG. 4) toward the vehicle 1 side (located inward of the lane marking), and the distance D2 > D1. In other words, a reference line on a traveling road with passing prohibition is located farther away from the lane marking toward the vehicle 1 side (located more inward of the lane marking) than a reference line on a traveling road with no passing prohibition. Specific examples of the reference lines L1, L2 and the center line ML will be described below with reference to FIG. 3 and FIG. 4. A flag F is "1" when a reference line is set, and is "0" when no reference line is set. FIG. 2 illustrates that the "passing prohibition" distance D2 (reference line L2) is set.

Now, a specific example of the reference line indicating whether or not to issue the lane departure prevention alert will be described in detail. FIG. 3 is a diagram illustrating the reference line L1, and FIG. 4 is a diagram illustrating the reference line L2. As illustrated in FIG. 3 and FIG. 4, the camera 12 is provided on a front side of the vehicle 1.

As illustrated in FIG. 3, a traveling road R is divided into a first lane (a traveling lane comprising the left lane marking LL and the center line ML) and a second lane (a traveling lane comprising the center line ML and the right lane marking RL). The vehicle 1 normally travels on the first lane and utilizes the second lane in a case of passing other vehicles. Thus, the center line ML serves as a lane marking which separates a fast lane from a normal cruising lane.

In FIG. 3, the left lane marking LL, the center line ML, and the right lane marking RL are recognized within an image taking range A1 of the camera 12. However, a road sign T for passing prohibition has not been captured within the image taking range A1 yet, and thus, the reference line L1 located at the distance D1 from the center line ML toward the vehicle 1 (located inward of the center line ML) is set as the reference line for the lane departure prevention alert. On the other hand, in FIG. 4, the left lane marking LL, the center line ML, and the right lane marking RL are recognized within the image taking range A1 of the camera 12, as is the case with FIG. 3. However, the vehicle 1 has further traveled, with the road sign T for passing prohibition captured within the image taking range A1 of the camera 12. Thus, the reference line L2 located at the distance D2 from the center line ML toward the vehicle 1 side (located inward of the center line ML) is set as the reference line for the lane departure prevention alert. The image taking range A1 illustrated in FIG. 3 and FIG. 4 are schematically depicted for convenience of description. Any image taking range A1 may be used so long as the image taking range A1 includes at least a range which allows taking of an image including the road sign T provided at the side of the traveling road R or the like and the lane markings (left lane marking LL, center line ML, right lane marking RL).

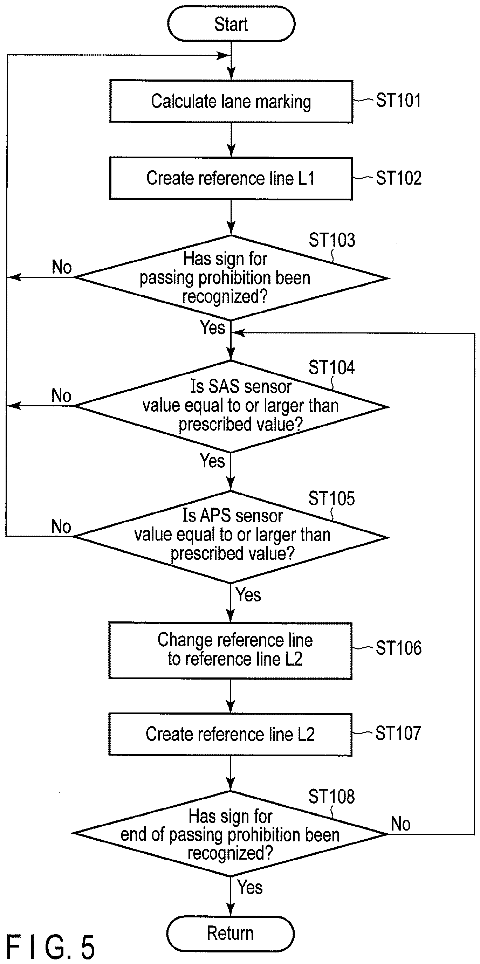

Now, a process of setting the reference line for the lane departure prevention alert will be described. FIG. 5 is a flowchart illustrating the process of setting the reference line which is executed by the ECU 11. The process is constantly executed while the vehicle 1 is traveling.

The ECU 11 calculates the lane markings (ST101). Specifically, based on the image data received from the camera 12 and input to the image processing unit 21, the lane marking processing unit 25 acquires information on the lane markings (left lane marking LL, center line ML, right lane marking RL) from the traveling road R and outputs the acquired information on the lane markings to the alert calculating unit 23.

Then, the ECU 11 creates a reference line for the lane departure prevention alert (ST102). Specifically, at this stage, information indicating that passing is prohibited on the road has not been received from the sign processing unit 24, and thus, the alert calculating unit 23 sets the flag F corresponding to the setting of "no limitation" in the reference line setting unit 26 to "1" and sets the flag F corresponding to the setting of "passing prohibition" in the reference line setting unit 26 to "0". Consequently, the reference line setting unit 26 creates the reference line L1 at the distance D1 from the center line ML toward the vehicle 1 side (see FIG. 3).

With the reference line L1 thus created, the ECU 11 determines whether or not the sign for passing prohibition has been recognized (ST103). Specifically, in a case of recognizing the sign in the image data on the image taking range A1 received from the camera 12, the sign processing unit 24 compares the image data on the road sign T with the image data on passing prohibition stored in the template data storage unit 22. If the image data on the road sign T matches the image data on passing prohibition the image data, information indicating that passing is prohibited on the traveling road is input to the alert calculating unit 23, which then executes the determination in step ST103 based on whether or not this information has been input. If the alert calculating unit 23 determines that the sign for passing prohibition has not been recognized (ST103: NO), the process returns to step ST101.

On the other hand, if the alert calculating unit 23 determines that the sign for passing prohibition has been recognized (ST103: YES), the ECU 11 determines whether or not the SAS sensor value is equal to or larger than a prescribed sensor value (SAS1) (ST104: steering angle determining means) and whether or not the APS sensor value is equal to or larger than a prescribed sensor value (APS1) (ST105: step-on amount determining means). If at least one of the determination results is NO (ST104: NO, ST105: NO), the process returns to step ST101.

On the other hand, if the SAS sensor value is equal to or larger than the prescribed sensor value (SAS1) (ST104: YES) and the APS sensor value is equal to or larger than the prescribed sensor value (APS1) (ST105: YES), the ECU 11 changes the reference line L1 to the reference line L2 (ST106: reference line changing means). Specifically, the alert calculating unit 23 sets the flag F corresponding to the setting of "no limitation" in the reference line setting unit 26 to "0" and sets the flag F corresponding to the setting of "passing prohibition" in the reference line setting unit 26 to "1".

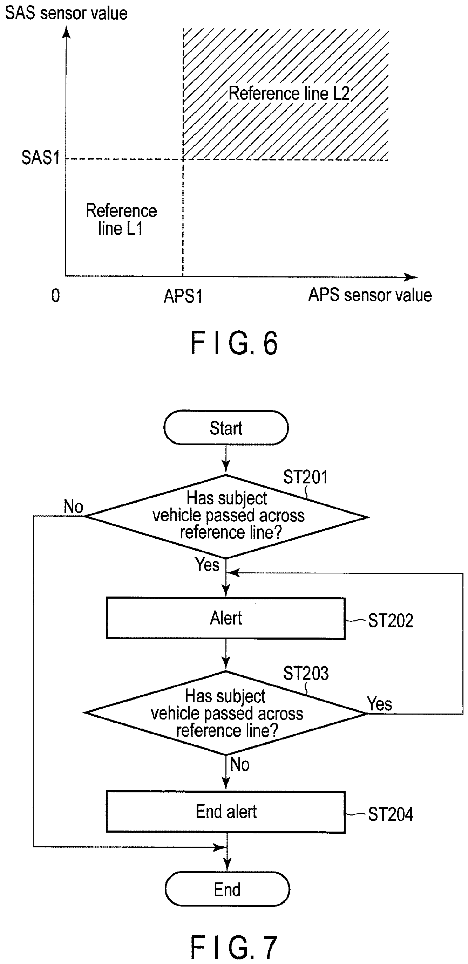

Here, FIG. 6 is a diagram illustrating an example of areas of the reference lines set based on the SAS sensor value and the APS sensor value in a case where passing is prohibited on the traveling road R where the vehicle 1 is traveling. The reference line L2 is set if the SAS sensor value is equal to or larger than the prescribed sensor value (SAS1) and the APS sensor value is equal to or larger than the prescribed sensor value (APS1). The reference line L1 is set if one of the two sensor values is smaller than the corresponding prescribed sensor value (SAS1, APS1).

Then, the ECU 11 creates the reference line L2 (ST107). In other words, the reference line setting unit 26 creates the reference line L2 at the distance D2 from the center line ML toward the vehicle 1 side (see FIG. 4). Consequently, the reference line is set which is located farther away from the center line ML toward the vehicle 1 than the reference line L1.

Then, the ECU 11 determines whether or not a sign for the end of passing prohibition has been recognized (ST109). Specifically, if the image data on the road sign within the image taking range A1 received from the camera 12 matches the data on the end of passing prohibition stored in the template data storage unit 22, the alert calculating unit 23 determines whether or not the sign for the end of passing prohibition has been recognized, based on information indicative of the end of passing prohibition which is received from the sign processing unit 24.

If the alert calculating unit 23 determines that the sign for the end of passing prohibition has not been recognized (ST109: NO), the process returns to step ST104. Furthermore, if the alert calculating unit 23 determines that the sign for the end of passing prohibition has been recognized (ST109: YES), the process returns to step ST101. Consequently, when passing prohibition ends or when one of the SAS sensor value and the APS sensor value is smaller than the corresponding prescribed value (SAS1, APS1), the reference line is changed from the reference line L2 to the reference line L1 (ST102).

Now, a lane departure prevention alerting process will be described. FIG. 7 is a flowchart illustrating an example of the lane departure prevention alerting process executed by the ECU 11.

The ECU 11 determines whether or not the vehicle 1 has passed across the reference line (ST201). Specifically, the ECU 11 determines whether or not the vehicle 1 has passed across the reference line L1 toward the center line ML side if the reference line L1 has been set, or determines whether or not the vehicle 1 has passed across the reference line L2 toward the center line ML side if the reference line L2 has been set. The determination of whether or not the vehicle 1 has passed across the reference line is similar to that in the related art, and thus, detailed description thereof is omitted. If the ECU 11 determines that the vehicle 1 has not passed across the reference line (ST201: NO), the process ends.

If the ECU 11 determines that the vehicle 1 has passed across the reference line (ST201: NO), the ECU 11 starts providing an alert (ST202). Specifically, the alert calculating unit 23 outputs alert information to the combination meter unit 14 to allow the display unit 27 to provide display, while allowing the alert unit 28 to emit a sound. This enables the driver to be alerted that the vehicle 1 may depart from the lane.

After starting the alert in this manner, the ECU 11 determines again whether or not the vehicle 1 has passed across the reference line (ST203). If the ECU 11 determines that the vehicle 1 has passed across the reference line (ST203: YES), the process returns to step ST202. In other words, the alert is continued.

On the other hand, if the ECU 11 determines that the vehicle 1 has not passed across the reference line (ST203: NO), the ECU 11 ends the alert (ST204). For example, if the driver performs an operation of turning the vehicle 1 away from the center line ML side to eliminate the possibility that the vehicle 1 will depart from the lane, the alert calculating unit 23 stops outputting the alert information to the combination meter unit 14. Consequently, a light of the display unit 27 is turned off and the sound from the alert unit 28 is stopped, allowing the driver to be alerted that the possibility of lane departure has been eliminated.

As described above, on the road with passing prohibition, when the SAS sensor value (steering angle) is indicative of a turn through a prescribed angle (SAS1) or larger toward the center line ML side and the APS sensor value (step-on amount) is equal to or larger than a prescribed amount (APS1), in other words, if the vehicle 1 is allowed to travel toward the center line ML side in accordance with the driver's intention, the lane departure prevention alert can be provided based on the reference line L2 located farther toward the vehicle 1 side (located further inward) than the reference line L1. Thus, on the road with passing prohibition, vehicle departure prevention support can be appropriately performed, allowing safer driving support to be achieved.

Furthermore, if at least one of the following conditions is satisfied: passing prohibition on the traveling road has ended, or the SAS sensor value is smaller than the prescribed angle (SAS1), or the APS sensor value is smaller than the prescribed amount (APS1), the ECU 11 changes the reference line L2 to the reference line L1. In other words, if passing prohibition ends or the driver no longer intends to depart from the lane, the ECU 11 may change the reference line L2 back to the reference line L1 to widen the range over which the vehicle can travel with no lane departure prevention alert provided. In other words, the area where the lane departure prevention alert is provided can be reduced to facilitate traveling of the vehicle 1.

### (Second Embodiment)

A second embodiment is different from the first embodiment in that, if the system has a function to deactivate the lane departure prevention alerting function when a direction indicator of the vehicle 1 is on, a process of stopping the function can be executed, for example, under the prescribed condition that passing is prohibited on the traveling road. The same components as those of the first embodiment are denoted by the same reference numerals, and illustration and description thereof are omitted.

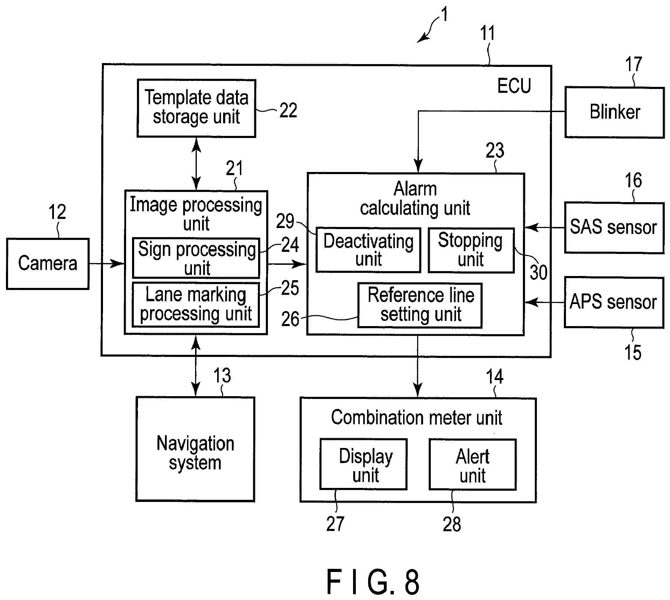

FIG. 8 is a diagram illustrating an example of a general configuration of the vehicle 1 of the present embodiment. The configuration in FIG. 1 is different from the configuration in FIG. 8 in that a blinker (direction indicator) 17 is added to the system and that the ECU 11 additionally includes a deactivating unit 29 and a stopping unit 30.

The blinker 17 comprises two operation units which indicate a right direction or a left direction. For example, to move the vehicle 1 rightward or leftward to change the lane, the driver operates the blinker 17 for the direction of the movement of the vehicle 1. When the blinker 17 is turned on, a tail lamp corresponding to the blinker is turned on to alert a driver of a succeeding vehicle that the vehicle 1 moves in the direction indicated by the tail lamp to change the lane.

The deactivating unit 29 deactivates the lane departure prevention alert while the blinker 17 is on. In other words, the lane departure prevention alert is not activated when the blinker 17 is on. Consequently, when the driver operates the blinker 17 and allows the vehicle 1 to move for a lane change, the alert is prevented from being issued even if the vehicle 1 passes across the reference line.

The stopping unit 30 stops the function of the deactivating unit 29 when, on the road with passing prohibition, the sensor value of the APS sensor 15 is equal to or larger than the prescribed sensor value (APS1) and the sensor value of the SAS sensor is equal to or larger than the prescribed sensor value (SAS1), in other words, if the reference line L2 has been set. In other words, if this condition is satisfied, the stopping unit 30 executes the lane departure prevention function.

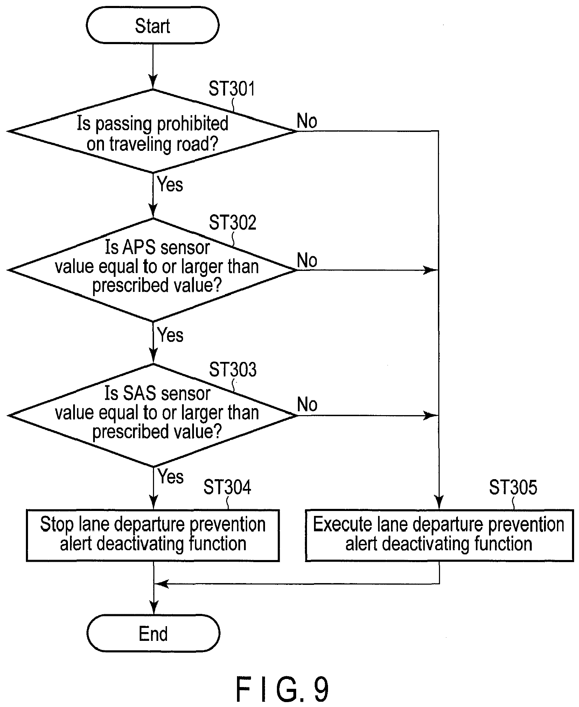

Now, a process of stopping the deactivating function for the lane departure prevention alert will be described. FIG. 9 is a flowchart illustrating an example of a stopping process executed by the ECU 11. The process is constantly executed while the vehicle 1 is traveling.

As illustrated in FIG. 9, on the road with passing prohibition (ST301: YES), when the sensor value of the APS sensor 15 is equal to or larger than the prescribed sensor value (APS1) (ST302: YES) and the sensor value of the SAS sensor 16 is equal to or larger than the prescribed sensor value (SAS1) (ST303: YES), in other words, if the reference line L2 has been set, the ECU 11 (stopping unit 30) stops the deactivating function for the lane departure prevention alert (ST304: stopping means). On the other hand, if any of the conditions fails to be satisfied (NO in any of ST301, ST302, ST303), in other words, if the reference line L2 has been set, the ECU 11 (deactivating unit 29) executes the deactivating function for the lane departure prevention alert (ST305: deactivating means).

As described above, the ECU 11 stops the deactivating function for the lane departure prevention alert regardless of ON/OFF of the blinker if, on the road with passing prohibition, the sensor value of the APS sensor 15 is equal to or larger than the prescribed sensor value (APS1) and the sensor value of the SAS sensor 16 is equal to or larger than the prescribed sensor value (SAS1), in other words, if the reference line L2 has been set. In other words, the driver can be alerted by execution of the lane departure prevention alert. Consequently, the appropriate alert can be provided even if the driver misses the road sign T for passing prohibition.

### (Third Embodiment)

A third embodiment is different from the first embodiment in that the distance at which the reference line is created is varied according to a resistance value of the traveling road R where the vehicle 1 travels. The same components as those of the first embodiment are denoted by the same reference numerals, and illustration and description thereof are omitted.

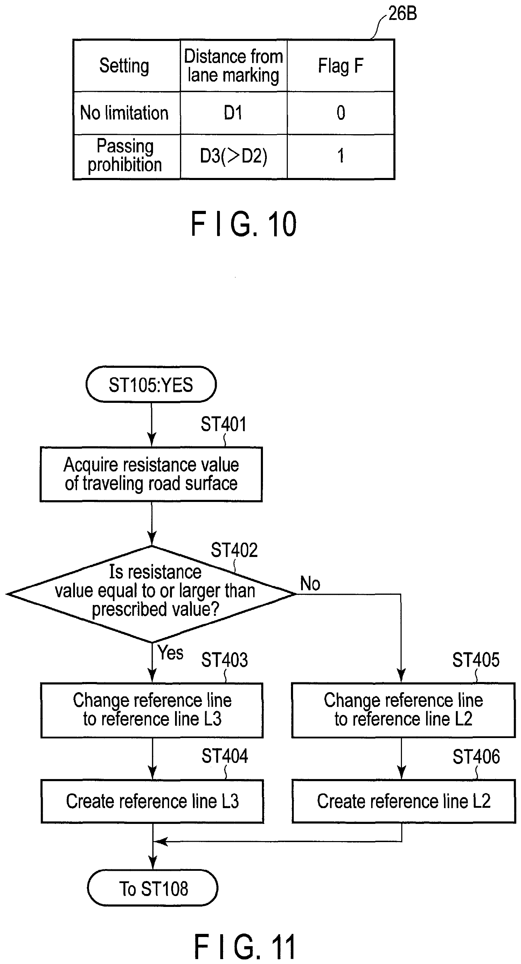

FIG. 10 is a diagram illustrating a reference line setting unit 26B corresponding to an example of settings in the reference line setting unit 26. As illustrated in FIG. 10, in a case of determining that the resistance value is equal to or larger than a prescribed value, the reference line setting unit 26B sets, for the setting of passing prohibition, the distance from the center line ML toward the vehicle 1 side (inward) to a distance D3 (> D2). A reference line created at the distance D3 from the center line ML toward the vehicle 1 side (at the inner side of the center line ML) is hereinafter referred to as a reference line L3 (third reference line).

FIG. 11 is a flowchart illustrating an example of a process of setting the reference line according to the third embodiment. The process is a process added to between the above-described step ST105 with the determination result of YES and the processing of step ST108. Thus, illustration and description of the remaining portion of the above-described process are omitted.

The ECU 11 acquires the resistance value of the traveling road surface (ST401: resistance value acquiring means). In the present embodiment, the ECU 11 acquires the resistance value of the traveling road based on the image data on the taken image taken by the camera 12. For example, the ECU 11 determines, for example, whether the traveling road R is paved with asphalt, the traveling road is wet with rain, or the traveling road is covered with snow, to acquire a preset resistance value based on the state of the road surface. The acquisition of the resistance value of the traveling road R is not limited to this method. For example, the ECU 11 may acquire, from the navigation system 13, information as to whether or not the traveling road R is paved with asphalt and information on the weather, and based on the information, determine the resistance value of the traveling road R. Moreover, for example, the ECU 11 may acquire the resistance value by calculation based on the number of rotations of axles and the distance that the vehicle 1 has actually advanced.

Then, the ECU 11 determines whether or not the resistance value is equal to or smaller than a prescribed value (ST402). In a case of determining that the resistance value is equal to or smaller than the prescribed value (ST402: YES), the ECU 11 changes the reference line for the lane departure prevention alert to the reference line L3 (ST403), and creates the reference line L3 at the distance D3 from the center line ML toward the vehicle 1 side (ST404). More specifically, for the setting of "passing prohibition" in the reference line setting unit 26, the ECU 11 changes the distance from the lane marking from the distance D2 to the distance D3 (> D2), sets the flag F to "1", and sets the flag F corresponding to "no limitation" to "0" (see FIG. 10), thus creating the reference line L3. In a case of determining that the resistance value is not equal to or smaller than the prescribed value (ST402: NO), the ECU 11 changes the reference line to the reference line L2 (ST405) to create the reference line L2 (ST406). These processes are the same as the processes in the above-described steps ST106, ST107.

In this configuration, the ECU 11 can provide the lane departure prevention alert based on the reference line L3 located farther toward the vehicle 1 side than the reference line L2 when the road surface of the traveling road R is slippery. This allows safety to be further enhanced.

In the above-described present embodiment, the distance at which the reference line is created is varied based on whether or not the resistance value is equal to or smaller than the prescribed value. However, the present invention is not limited to this. For example, the distance at which the reference line is created may be linearly varied according to the acquired resistance value.

### (Fourth Embodiment)

A fourth embodiment is different from the above-described first embodiment in that the distance at which the reference line is created is varied according to the lane width of a traveling lane (first lane) where the vehicle 1 travels. The same components as those of the first embodiment are denoted by the same reference numerals, and illustration and description thereof are omitted.

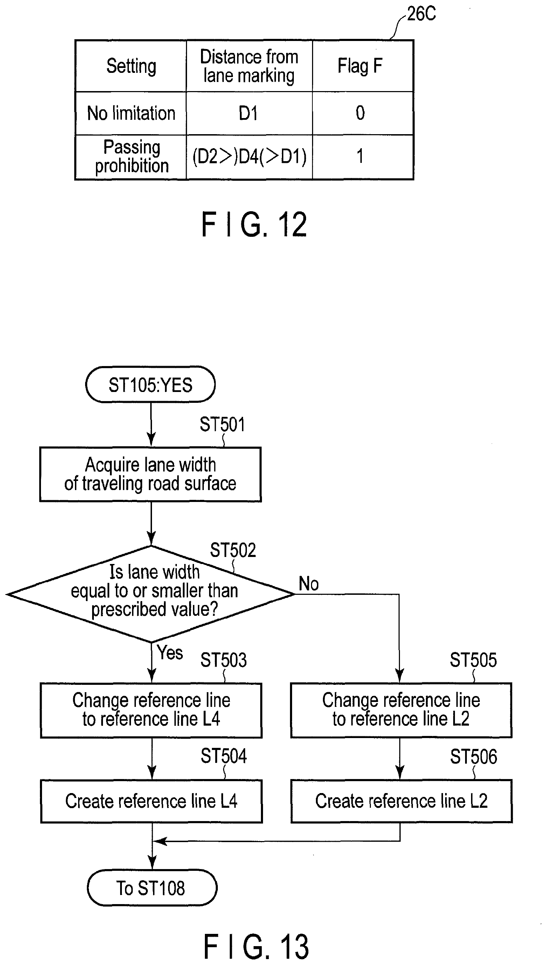

FIG. 12 is a diagram illustrating a reference line setting unit 26C corresponding to an example of settings in the reference line setting unit 26. As illustrated in FIG. 12, in a case of determining that the lane width is equal to or smaller than the prescribed value, the reference line setting unit 26C sets, for the setting of passing prohibition, the distance from the center line ML toward the vehicle 1 side to a distance (D2 >) D4. A reference line created at the distance D4 from the center line ML is referred to as a reference line L4 (fourth reference line).

FIG. 13 is a flowchart illustrating an example of a process of setting the reference line according to the fourth embodiment. The process is a process added to between the above-described step ST105 with the determination result of YES and the processing of step ST108. Thus, illustration and description of the remaining portion of the above-described process are omitted.

The ECU 11 acquires the lane width of the traveling lane (ST501: lane width acquiring means). In the present embodiment, the ECU 11 acquires the lane width (the distance between the left lane marking LL and the center line ML) of the traveling lane of the vehicle 1 based on the image data on the take image taken by the camera 12.

The ECU 11 then determines whether or not the lane width is equal to or smaller than a prescribed value (ST502). In a case of determining that the lane width is equal to or smaller than the prescribed value (ST502: YES), the ECU 11 changes the reference line for the lane departure prevention alert to the reference line L4 (ST503), and creates the reference line L4 at the distance D4 from the center line ML toward the vehicle 1 side (at the inner side of the center line ML) (ST504). More specifically, for the setting of "passing prohibition" in the reference line setting unit 26C, the ECU 11 changes the distance from the lane marking from the distance D2 to the distance (D2 >) D4, sets the flag F to "1", and sets the flag F corresponding to "no limitation" to "0" (see FIG. 12), thus creating the reference line L4. In a case of determining that the lane width is not equal to or smaller than the prescribed value (ST502: NO), the ECU 11 changes the reference line to the reference line L2 (ST505), and creates the reference line L2 (ST506). These processes are the same as the processes in the above-described steps ST106, ST107.

In this configuration, the ECU 11 can provide the lane departure prevention alert based on the reference line L4 located outward of the reference line L2 (located on the center line ML side) when the first lane of the traveling road R where the vehicle 1 travels has a small lane width. This enables an increase in the lane width over which the lane departure prevention alert is not issued, allowing the traveling performance of the vehicle 1 to be enhanced.

In the above-described present embodiment, the distance at which the reference line is created is changed based on whether or not the lane width is equal to or smaller than the prescribed value. However, the present invention is not limited to this. For example, the distance at which the reference line is created may be linearly varied according to the acquired lane width, as is the case with the third embodiment.

### (Fifth Embodiment)

In the above-described first to fourth embodiments, the left-hand traffic is specified for the traveling road. However, the present embodiment is applicable to a case where right-hand traffic is specified for the traveling road. Here, the right-hand traffic refers to a regulation under which, if, for example, the traveling road is divided into two lanes by the center line, vehicles normally travel on the right lane and use the left lane when passing other vehicles.

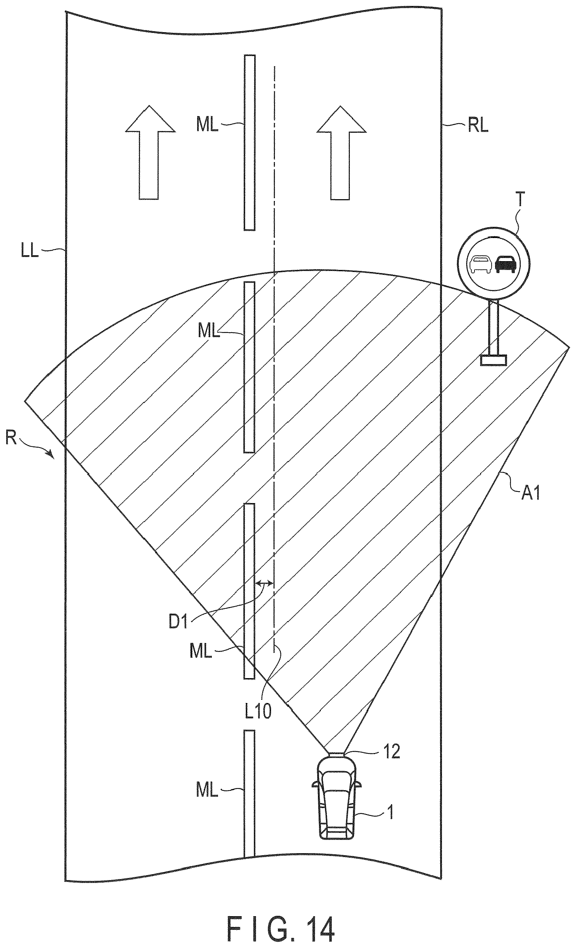

FIG. 14 is a diagram illustrating an example of the reference line. The road sign T indicative of passing prohibition is not captured within the image taking range A1, and thus, a reference line L10 has been created at the distance D1 from the center line ML toward the vehicle 1 side (inward of the center line ML). The reference line L10 corresponds to the reference line L1 described above with reference to FIG. 3.

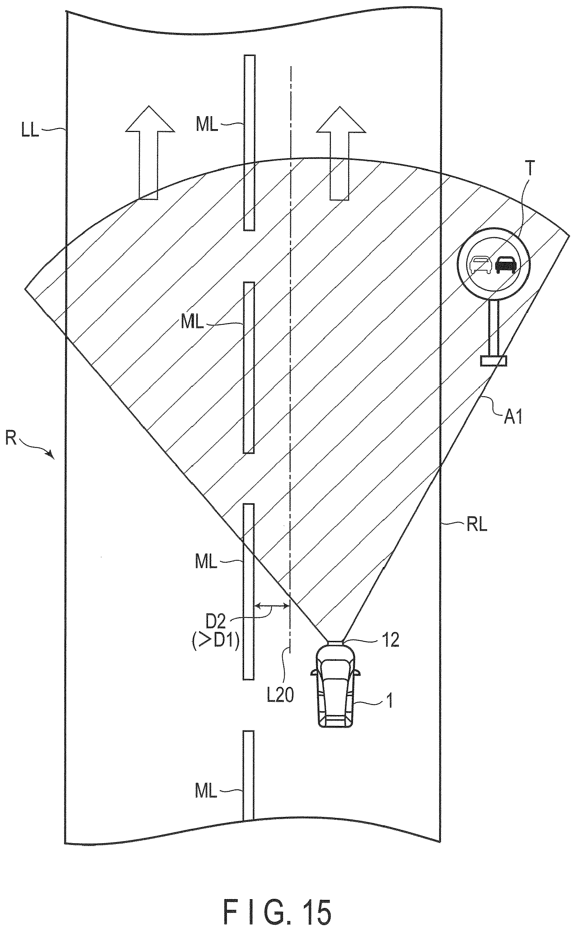

Furthermore, FIG. 15 is a diagram illustrating an example of the reference line. The road sign T indicative of passing prohibition is captured within the image taking range A1, and thus, a reference line L20 has been created at the distance D2 from the center line ML toward the vehicle 1 side (inward of the center line ML). The reference line L20 corresponds to the reference line L2 described above with reference to FIG. 4.

Even when the traveling road R is thus configured, the inventions described in the first to fourth embodiments are applicable.

## Claims

1. A driving support system (11) configured to support driving of a vehicle (1) by a driver, the driving support system comprising:
image taking means (12) for taking an image of a lane marking (LL, ML, RL) on a traveling road; and
alerting means (28) for creating a first reference line (L1) at an inner side of the lane marking obtained based on the taken image taken by the image taking means and alerting the driver when the vehicle passes across the first reference line,
the driving support system **characterized by** comprising:
steering angle determining means (ST104) for determining whether or not a steering angle of a steering wheel is equal to or larger than a prescribed angle toward the lane marking side;
step-on amount determining means (ST105) for determining whether or not a step-on amount by which an accelerator pedal is stepped on is equal to or larger than a prescribed amount;
acquiring means (24) for acquiring information as to whether or not passing is prohibited on a traveling road where the vehicle travels; and
reference line changing means (ST106) for changing the first reference line to a second reference line (L2) located inward of the first reference line when information indicating that passing is prohibited on the traveling road where the vehicle travels has been acquired by the acquiring means, the steering angle is equal to or larger than the prescribed angle toward the lane marking side, and the step-on amount is equal to or larger than the prescribed amount.

2. The driving support system according to Claim 1, **characterized in that** the reference line changing means changes the second reference line to the first reference line when at least one of following conditions is satisfied: passing is no longer prohibited on the traveling road, the steering angle is smaller than the prescribed angle toward the lane marking, and the step-on amount is smaller than the prescribed amount.

3. The driving support system according to Claim 1 or 2, wherein the vehicle includes a direction indicator (17) configured to alert the driver of a lane change, and
the driving support system **characterized by** further comprises:
deactivating means (ST305) for deactivating the alerting means when the direction indicator is on; and
stopping means (ST304) for stopping the deactivating means when the reference line has been changed to the second reference line by the reference line changing means.

4. The driving support system according to Claim 1, comprising resistance value acquiring means (ST401) for acquiring a resistance value of a road surface of the traveling road, **characterized in that**
the reference line changing means changes the second reference line to a third reference line (L3) located inward of the second reference line when the reference value acquired by the resistance value acquiring means is equal to or smaller than a prescribed value.

5. The driving support system according to Claim 1, **characterized by** further comprising lane width acquiring means (ST501) for acquiring a lane width of the traveling road, **characterized in that**
the reference line changing means changes the second reference line to a fourth reference line (L4) located outward of the second reference line when the lane width acquired by the lane width acquiring means is equal to or smaller than a prescribed value.
